Europäisches Patentamt

European Patent Office

Office européen des brevets

(11) Veröffentlichungsnummer: **0 452 868 A2**

# EUROPÄISCHE PATENTANMELDUNG

(21) Anmeldenummer: 91106031.7

(51) Int. Cl.5: **B29C 47/66**, B29C 47/64

(22) Anmeldetag: 15.04.91

(30) Priorität: 20.04.90 DE 4012612

(43) Veröffentlichungstag der Anmeldung:
23.10.91 Patentblatt 91/43

(84) Benannte Vertragsstaaten:
FR GB IT

(71) Anmelder: Kraftanlagen AG.
Im Breitspiel 7
W-6900 Heidelberg 1(DE)

(72) Erfinder: Baumgarten, Wilfried
Stettiner Str. 17
W-3917 Pattensen(DE)

(74) Vertreter: Helber, Friedrich G., Dipl.-Ing. et al
Zenz, Helber & Hosbach Scheuergasse 24
W-6144 Zwingenberg(DE)

(54) **Schneckenextruder.**

(57) Die Erfindung betrifft einen Schneckenextruder für die Verarbeitung von plastischen Massen, insbesondere von Kunststoffen und/oder Kautschukmischungen, bestehen aus einem Zylinder, in welchem eine motorisch angetriebene Schnecke angeordnet ist, von denen der Zylinder mit radial durch Öffnungen in der Zylinderwand einschiebbare, in mehrere Ebenen senkrecht zur Zylinderachse angeordneten Stiften und die Schnecke mit in den Stiftebenen angeordneten Ausnehmungen in den Schneckenwindungen versehen ist. Der Erfindung liegt die Aufgabe zugrunde, eine praktisch anwendbare und wirtschaftliche Möglichkeit der Stift-Schnellverstellung bzw. -tiefeneinstellung an Schneckenextrudern zu schaffen. Die Erfindung besteht darin, daß mehrere, in einer achsparallelen Reihe liegende Stifte mit deren aus dem Extruderzylinder herausragenden Ende an einem Träger befestigt sind.

FIG.2

EP 0 452 868 A2

Die Erfindung betrifft einen Schneckenextruder für die Verarbeitung von plastischen Massen, insbesondere von Kunststoffen und/oder Kautschukmischungen, bestehend aus einem Zylinder, in welchem eine motorisch angetriebene Schnecke angeordnet ist, von denen der Zylinder mit radial durch Öffnungen in der Zylinderwand einschiebbare, in mehreren Ebenen senkrecht zur Zylinderachse angeordneten Stiften und die Schnecke mit in den Stiftebenen angeordneten Ausnehmungen in den Schneckenwindungen versehen ist.

Derartige Schneckenextruder sind aus der DE-PS 137 813 und der US-PS 18 48 236 bekanntgeworden. Die radial in den Extruderzylinder hineinragenden Stifte verbessern die Durchknetung und die Durchmischung des geförderten Materials, manchmal ermöglichen sie diese überhaupt erst.

Diese Stifte müssen bei einem Schneckenwechsel und bei Reinigungen des Extruders demontiert und anschließend wieder montiert werden. Beim Einschrauben der Stifte besteht die Möglichkeit der Tiefeneinstellung, die benutzt wird, um durch weniger tief in den Zylinder ragende Stifte den Schneckenwiderstand zu erniedrigen und durch tiefer eingeschraubte Stifte die Durchknetung und Durchmischung zu verbessern.

Gelegentlich besteht der Wunsch, aus verfahrenstechnischen Gründen die Stifttiefe schnell und ohne großen Zeitaufwand zwischen Null und einem Maximum variieren zu können. Stiftextruder zur Verarbeitung von nicht vorgewärmten Kautschukmischungen haben in der Bauart nach der DE-PS 22 35 784 eine große wirtschaftliche Bedeutung erlangt. Die mechanische, mit Spiralscheiben arbeitende stifttiefeneinstellung wird aber aus Kostengründen nur selten angewandt. Die Bewegung von z.B. acht Stiften in einer Stiftebene erfordert auch erhebliche Kräfte und verursacht dadurch einen starken Verschleiß an den Einstellelementen. Für die in der Praxis üblichen zahlreichen, etwa sechs bis sechzehn Stiftebenen ist diese Verstellung darüber hinaus auch recht zeitraubend. Daher besteht das Bedürfnis nach einer Schnellverstellung der Stifte, um bei einem Wechsel der Förderschnecke aus verfahrenstechnischen Gründen gegen eine anders gestaltete oder bei Verschleiß oder aus Reinigungsgründen möglichst wenig Produktionszeiten zu verlieren.

Durch die DE-PS 35 03 911 ist eine hydraulische Stiftverstellung bekanntgeworden, die es gestattet, die Stifte leicht und schnell voll einzufahren und voll herauszuziehen, wobei jeder Stift durch eine Kolbenstange eines hydraulischen Zylinders gebildet wird. Hier ist für jeden Stift ein gesonderter Hydraulikzylinder vorgesehen. Die Möglichkeit, bestimmte definierte Stifttiefeneinstellungen hierbei zu realisieren, scheiterte praktisch an dem immens hohen steuerungstechnischen Aufwand. Allein das völlige Ein- und Ausfahren ist baulich auch schon so aufwendig, daß sich diese hydraulische Stiftverstellung nicht in größerem Maße einführen konnte.

Eine mechanisch sehr einfach erscheinende Stiftverstellung, die theoretisch auch die Möglichkeit der beliebigen Tiefeneinstellung bietet, ist durch die DE-PS 35 06 424 bekanntgeworden. Der Nachteil dieser Bauart mit Kellenantrieben für die Schraubbewegung zur axialen Verstellung der Stifte liegt darin, daß extrem große Reibungskräfte vorliegen, die eine Konstruktion nach diesem Prinzip funktionsunfähig machen, weshalb sie praktisch nicht angewendet worden ist.

Die vorliegende Erfindung vermeidet die Nachteile des Standes der Technik. Der Erfindung liegt die Aufgabe zugrunde, eine praktisch anwendbare und wirtschaftliche Möglichkeit der Stift-Schnellverstellung bzw. -tiefeneinstellung an Schneckenextrudern zu schaffen.

Die Erfindung besteht darin, daß mehrere, in einer achsparallelen Reihe liegende Stifte mit deren aus dem Extruderzylinder herausragenden Ende an einem Träger befestigt sind.

Die radial angeordneten Stifte eines Extruderzylinders oder eines Extruderzylinderschusses werden hierbei, in Achsrichtung gesehen, reihenweise unter Anwendung je eines Längsträgers, an dem die Stifte einer Reihe befestigt sind, gemeinsam bewegt. Dabei kann diese Bewegung der an einen Träger gekoppelten Stifte sowohl rein mechanisch mittels Hebeln oder Exzentern, mittels Schrauben oder anderen üblichen Maschinenelementen erfolgen. Vorzugsweise wird man jedoch jeden Träger durch Servomotore verschieben, wobei sowohl pneumatische als auch hydraulische als auch elektromechanische Servomotore Verwendung finden können, also z.B. pneumatische oder hydraulische Kolben-Zylinder-Einheiten, elektromotorisch oder hydraulisch angetriebene Spindeln u.a. Dadurch, daß diese Elemente jeweils für eine ganze Reihe von Stiften wirksam sind, ergibt sich kostenmäßig eine deutliche Ersparnis, eine große Gleichmäßigkeit in der gewählten Tiefeneinstellung und eine sichere Kontrolle der Einstelltiefe. Hat ein üblicher Extruderzylinder z.B. acht Stifte in einer Stiftebene und weist er z.B. zwölf Stiftebenen auf, so benötigt er nicht 96 hydraulische Zylinder nebst aufwendigen Steuerungen und Verbindungselementen, sondern nur acht Verstellvorrichtungen für die acht Träger dieser acht Stiftreihen.

Damit die Träger nicht nur parallel zur Extruderzylinderachse verschiebbar sind, sondern auch in eine Schrägstellung zu dieser Achse verschiebbar sind, was den Vorteil hat, daß mit jeder Radialabene die Stifte tiefer in den Zylinder eintauchen und so die Bearbeitung des zu extrudierenden Materials nach und nach intensiver wird, ist eine Bauform zweckmäßig, bei der die Stifte über eine Gelenkverbindung oder mittels in Langlöchern geführter Zapfen an dem Träger befestigt sind.

Durch die Verwendung dieser Träger wird erheblich an Bauraum eingespart, denn die Anzahl der benötigten Verstellvorrichtungen für die Träger ist erheblich geringer als die Anzahl der Verstellvorrichtungen für die gemäß dem Stande der Technik einzeln mittels je eines Hydraulikzylinders betätigten Stifte. Denn bei zwölf Stiftebenen beispielsweise werden allein zehn Hydraulikzylinder eingespart, von den zu diesen führenden Zuleitungen ganz zu schweigen. Um noch weiter an Bauraum zu sparen, ist es zweckmäßig, die Servomotore zwischen zwei Stiften anzuordnen und an dem Träger zu befestigen.

Zweckmäßig ist es, wenn neben der Bewegungsbahn des Trägers Skalen und/oder Meßgeber angeordnet sind, oder wenn Meßgeber vorgesehen sind, die die Stellung des Trägers abtasten. Durch die Anwendung von mechanischen Skalen oder elektrischen Weggebern wird es somit möglich, zu kontrollieren, ob die Stifte voll ein- oder ausgefahren sind oder welche Tiefeneinstellung vorliegt. Gerade bei einer mittleren Tiefeneinstellung ist es problemlos, z.B. acht Einstellvorrichtungen gemeinsam zu steuern und/oder zu überwachen, während dieses bei 96 Hydraulikzylindern in der Tiefeneinstellung praktisch kaum noch oder nur mit größtem Aufwand exakt überwachbar ist. Denn gerade in der Praxis kann es von Wichtigkeit sein, die Eindringtiefe der Stifte in Förderrichtung des Extruders gesehen, verschieden tief einzustellen. Ist z.B. das zu verarbeitende Material so extrem hart oder zäh, daß Stiftbrüche zu befürchten sind, so ist es zweckmäßig, die Stifteinstelltiefe der ersten Stiftebene zu vermindern und durch eine Schrägstellung der Träger die Eindringtiefe in axialer Richtung von einem minimalen Anfangswert bis zum maximalen Wert einzustellen.

In manchen Fällen kann es auch zweckmäßig sein, Arretiervorrichtungen für eine Parallel- oder Schrägstellung der Träger vorzusehen. Bei der Verwendung dieser Träger ist es auch leicht möglich, die Träger auf unterschiedliche Tiefeneinstellungen und/oder Schrägeinstellungen einzusteuern.

Das Wesen der Erfindung ist nachstehend anhand von in der Zeichnung schematisch dargestellten Ausführungsbeispielen näher erläutert. Es zeigen:

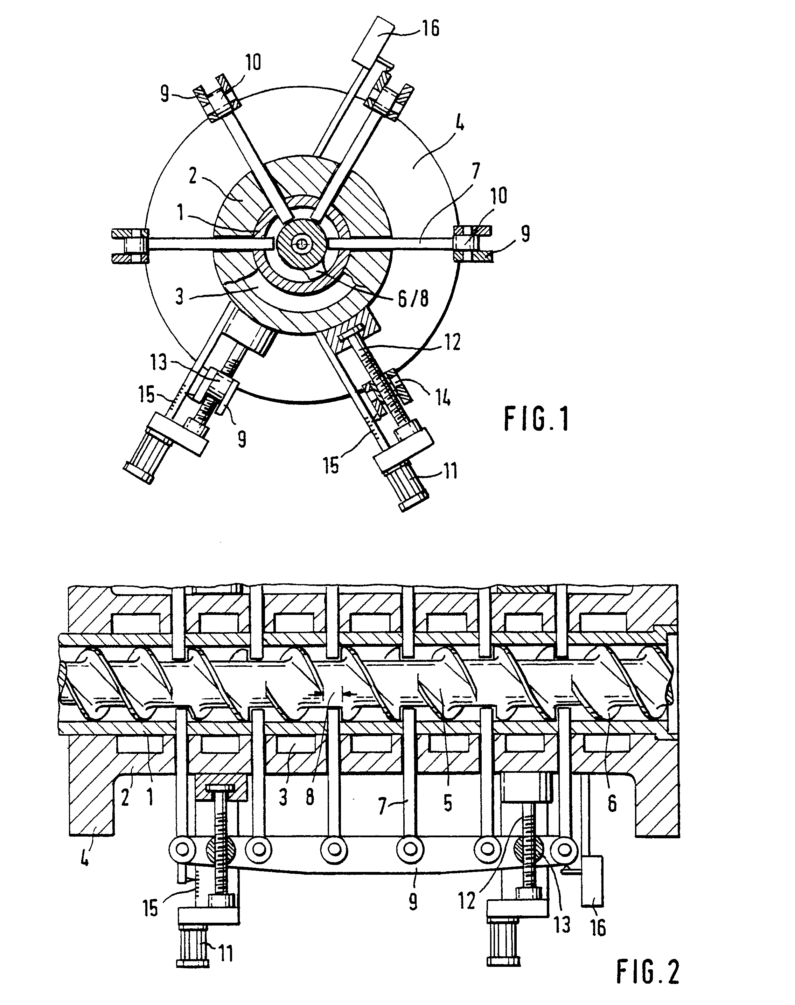

Fig. 1    einen Querschnitt durch einen Extruderzylinder mit einer elektromechanischen Verstellung der Träger;

Fig. 2    einen Radialschnitt durch diesen Extruderzylinder;

Fig. 3    einen Querschnitt durch einen Extruderzylinder mit hydraulischer Verstellung der Träger; und

Fig. 4    einen Radialschnitt durch diesen Extruder.

Der Zylinder 1 des Extruders ist in einen Mantel 2 eingeschoben, welcher Kühlkanäle 3 und Flansche 4 aufweist. In diesem Zylinder 1 ist eine Schnecke 5 mit Windungen 6 eingeschoben. Diese Schnecke 5 wird motorisch angetrieben. Der Zylinder 1 weist radiale Öffnungen auf, durch die sich Stifte 7 erstrecken, die in nden Innenraum des Zylinders 1 eintauchen. Aus diesem Grunde weisen die Windungen 6 der Schnecke 5 Ausnehmungen 8 auf.

Die Stifte 7 je einer in Achsrichtung des Zylinders gesehenen Stiftreihe sind gemeinsam an einem Träger 9 über Gelenke 10 befestigt. Durch einen Elektromotor 11 angetriebene Spindeln 12 greifen in Spindelmuttern 13 ein, welche in Gelenken 14 am Träger 9 gelagert sind. Durch elektromotorische Verdrehung der Spindeln können die Träger in verschiedene Abstände zur Zylinderachse parallel zu dieser und schräg zu dieser eingefahren werden. Hierdurch kann die Eindringtiefe der Stifte 7 verschieden eingestellt werden, die Stifte 7 können ganz ausgefahren werden oder auf eine maximale Eindringtiefe eingestellt werden.

An einer Skala 15 kann die Eindringtiefe abgelesen werden. Geber 16 ermitteln auf elektrischem Wege die Eindringtiefe der Stifte 7.

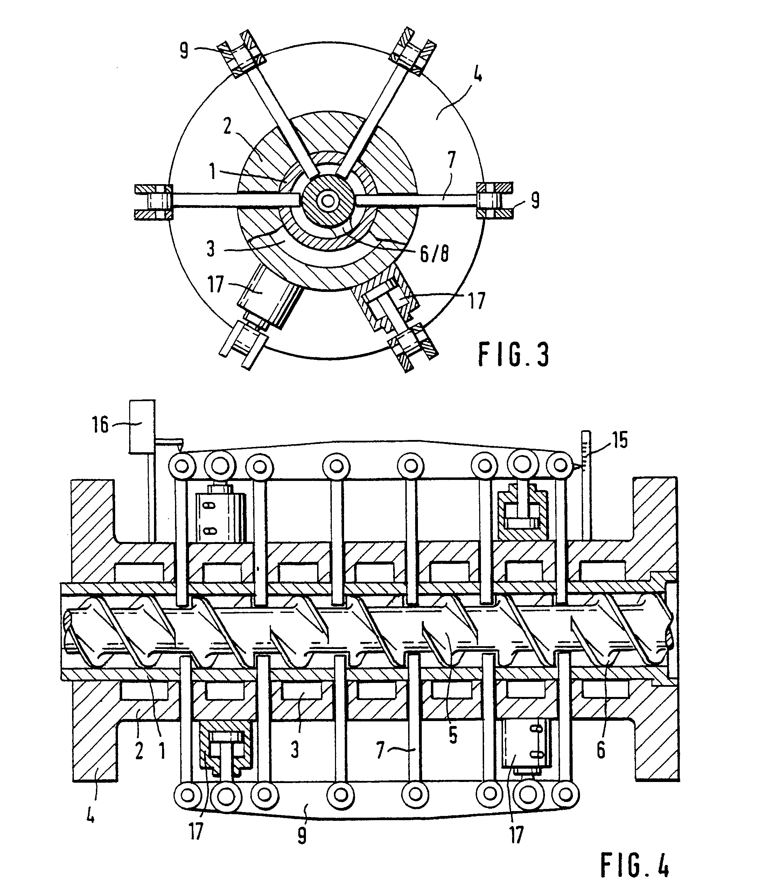

Im Ausführungsbeispiel der Figuren 3 und 4 werden die Träger 9 mittels Hydraulik-Kolben-Zylinder-Einheiten 17 verstellt. Hier sind die Hydraulik-Kolben-Zylinder-Einheiten 17 zwischen je zwei Stiften 7 angeordnet, wodurch eine kürzere Bauform erzielt werden kann.

## Patentansprüche

1.  Schneckenextruder für die Verarbeitung von Plastischen Massen, insbesondere von Kunststoffen und/oder Kautschukmischungen, bestehend aus einem Zylinder, in welchem eine motorisch angetriebene Schnecke angeordnet ist, von denen der Zylinder mit radial durch Öffnungen in der Zylinderwand einschiebbare, in Ebenen senkrecht zur Zylinderachse angeordnete Stifte und die Schnecke mit in den Stiftebenen angeordneten Ausnehmungen in den Schneckenwindungen versehen ist, **dadurch gekennzeichnet,** daß mehrere, in einer achsparallelen Reihe liegende Stifte (7) mit ihrem aus dem Zylinder (1) herausragenden Ende an einem Träger (9) befestigt sind.

2.  Schneckenextruder nach Anspruch 1, bei dem die Stifte durch hydraulische oder elektromechanische Stellmotore verstellbar sind, dadurch gekennzeichnet, daß der Träger (9) durch Servomotore (12, 17) verschiebbar ist.

3. Schneckenextruder nach Anspruch 1, dadurch gekennzeichnet, daß die Stifte (7) über eine Gelenkverbindung (10) oder mittels in einem Langloch geführten Zapfen an dem Träger (9) befestigt sind.

4. Schneckenextruder nach Anspruch 1, dadurch gekennzeichnet, daß die Servomotore (12, 17) zwischen zwei Stiften (7) an dem Träger (9) befestigt sind.

5. Schneckenextruder nach Anspruch 1, dadurch gekennzeichnet, daß neben der Bewegungsbahn des Trägers (9) Skalen (15) und/oder Meßgeber (16) angeordnet sind.

6. Schneckenextruder nach Anspruch 1, dadurch gekennzeichnet, daß Megeber (16) vorgesehen sind, die die Stellung des Trägers (9) abtasten.

7. Schneckenextruder nach Anspruch 1, dadurch gekennzeichnet, daß Arretiervorrichtungen für eine Parallel- und Schrägstellung der Träger (9) vorgesehen sind.

FIG.1

FIG.2

EP 0 452 868 A2

FIG. 3

FIG. 4

6